# EUROPEAN PATENT SPECIFICATION

(11) **EP 1 880 115 B1**
(45) Date of publication and mention of the grant of the patent: **07.03.2012**
(21) Application number: 06701352.4
(22) Date of filing: 17.01.2006
(51) Int. Cl.: F16D 3/41

(54) **ARRANGEMENT OF COUPLING**
VERBINDUNGSANORDNUNG
ARRANGEMENT DE COUPLAGE

(30) Priority: 17.01.2005 SE 0500117
(43) Date of publication of application: 23.01.2008
(73) Proprietor: Voith Turbo Safeset AB, 82434 Hudiksvall (SE)
(72) Inventor: Falk, Curt Gunnar, 824 51 Hudiksvall (SE)
(74) Representative: Lindblom, Erik J
(86) International application number: PCT/SE2006/000066
(87) International publication number: WO 2006/075963

(56) References cited:
- EP-A1- 1 475 549
- US-A- 3 204 428
- US-A- 3 204 428
- US-A- 5 649 778
- US-A1- 2003 211 894

## Description

### TECHNICAL FIELD OF THE INVENTION

The present invention relates generally to a coupling arrangement and more specifically to a coupling arrangement adapted for and an inclusion in a torque transmitting universal-joint-related arrangement and is concerned particularly with a further development of bearing arrays in earlier known universal-joint-related arrangements.

Such a universal-joint-related arrangement will include;
a. a first rotatable axle or the like;
b. a first forked unit related to an end region of said first axle;
c. wherein said first forked unit has a U-shape with two mutually parallel legs;
d. a torque transmitting member in the form of a cross, illustrated as an "X";
e. two mutually opposed arm portions belonging to said torque transmitting member and rotatably co-acting with a respective one of said two legs;
f. a second rotatable axle or the like;
g. a second forked unit belonging to said second axle and having an end region which faces towards the torque transmitting member;
h. wherein said second forked unit has a U-shape that includes two legs;
i. wherein two mutually opposite arm portions belonging to said torque transmitting member each rotatably co-acting with a respective one of said two legs;
j. and further includes a number of radial bearings each orientated between respective legs and one of the arm portions of said torque transmitting member; and
k. an axially orientated and directed load absorbing means, active between respective legs and the end surfaces of respective arm portions.

It will be noted in this respect that the four arms of the torque transmitting member rotatably co-act with respective legs of the first and the second forked units, and that the legs of respective units are orientated pair-wise at right angles to one another.

The present invention is based on a universal-joint-related arrangement which is primarily adapted and dimensioned to enable the transmission of a higher torque than that afforded by prior art techniques and which allows a coordination of rotatable co-action between the respective arm portions of said torque transmitting member and the legs of respective forked units, said rotatable co-action being restricted to a reciprocating rotational movement, normally limited to a maximum of 10 to 20°.

The invention is more precisely based on an arrangement of the kind defined in the preamble of the accompanying claim 1.

### BACKGROUND OF THE INVENTION

Methods for producing and assembling universal-joint-related arrangements and the arrangements thus assembled are known to the art and are adapted for mutually different technical applications and therewith normally consist of different structural designs related to the magnitude of the torque to be transmitted and to which application the torque transmission structure applies.

Because it is an aim of the present invention to provide a universal-joint-related arrangement that can be used in respect of various technical applications and for mutually different torques and torque variations the earlier standpoint of techniques described below are limited solely to a few applications that can be considered to adequately describe and illustrate prior art constructions.

By way of a first example of the earlier standpoint of techniques reference can be made to the universal-joint-related arrangement taught by the US patent Specification US-A-5 035 676.

This prior art publication teaches a universal-joint-related arrangement in which the end regions of a first and a second axles or the like are formed as two mutually co-ordinated construction halves through the medium of two U-shaped forked units, these construction halves being held together by clamping elements, such as by bolt-and-nut arrangements.

Another example of the earlier standpoint of techniques is one in which a universal-joint-related arrangement is in the form a first axle and a second axle whose end regions have the form of a U-shaped forked unit as a single construction unit so as to enable an adapted torque to be transmitted with the aid of these forked units and an intermediate element.

Since the present invention is intended to simplify the manufacture of a universal-joint-related arrangement at a lower cost and has therefore been concentrated to the requirements for and arrangements around the axial bearing and its functions, there can be mentioned the following patented constructions that can be considered to be related to the technique to which the present invention relates.

The following patent publications can be mentioned in this respect;

### US-B2-6 722 787.

This earlier publication illustrates and describes a ring adapted to an axial bearing arrangement such as to form a running surface for rolling elements and also to enable its use in a universal-joint arrangement.

The ring-shaped (1) running surface (2) is placed between the end surfaces of the arms of the torque transmitting member and the legs of the forked units.

### EP-A1-1 001 182.

This earlier published patent specification illustrates and describes a universal-joint arrangement in which a first bearing means (12) includes a radial bearing (14) and an axial bearing (18) where a second bearing means (13) includes a radial bearing (15) and an axial bearing (19).

The axial bearings (18, 19) are placed between the end surfaces of the arms of the torque transmitting member and the legs of the forked units also in this case.

### US-A-4 144 724.

The construction of a universal-joint-related arrangement, taught by this earlier publication, utilizes a radial bearing (15) and an axial bearing and enables the use of step-forming shoulders.

### GB-A-2 249 818.

This prior publication illustrates and describes a universal-joint-related arrangement in which a radial bearing means (11) is orientated between the four arms of the torque transmitting member and the legs of the forked units.

More particularly it is a question of allowing the axial bearing means (19) to co-act with a supporting ring (24), which is resilient in order to adjust itself automatically under load and therewith improve the load distribution in the axial bearing means.

The supporting ring preferably defines an internal chamber (25) filled with an incompressible medium, such as oil or grease, the quantity of such medium in the chamber being variable in order to adjust the axial bearing means.

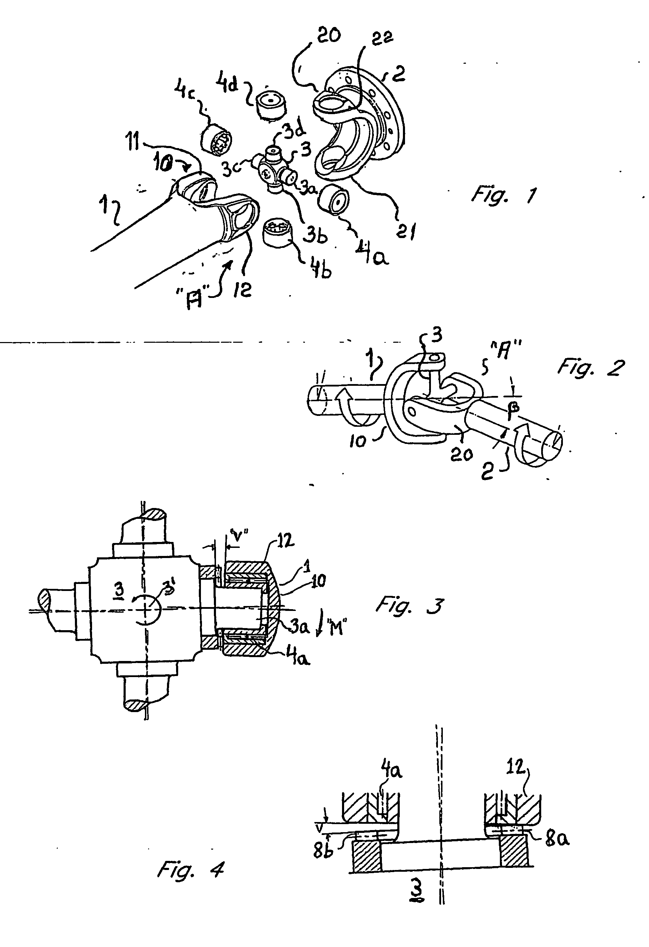

(Compare herewith the conditions given in Figures 3 and 4).

### USA-A-3 204 428.

This prior publication, which is considered as the closest prior art, illustrates and describes universal-joint-related arrangement that includes radial bearing means and axial bearing means and also mutually intersecting passage ways (22), orientated through the torque transmitting member (C). The contents of this prior patent publication will be described more closely in the following text.

### US-A-4 705 490.

This prior patent specification illustrates and describes a universal-joint-related arrangement whose construction is, in principle, connected to the arrangement described and illustrated in the above mentioned patent publication GB-A-2 249 818.

### US-A-4 637 807.

This prior publication illustrates and describes a universal joint arrangement whose construction, in principle, is similar to the prior publication US-A-5 035 676, described above.

A further example of a universal-joint-related arrangement is found in the German Offenlegungsschrift DE-A1-198 51 771, which illustrates and describes an arrangement in which axial bearing means are co-ordinated with the end faces of the arms of the torque transmitting member and the legs of the forked units, where radial bearing means are disposed around the arm portions.

As the characteristic features of the present invention are associated with the use of rod-like elements that extend through the torque transmitting member and the arm portions related to said member the following known techniques can be mentioned.

### US-A-3 204 428.

This earlier published specification illustrates and describes a universal-joint-related arrangement that includes a torque-transmitting member (C) which, in Figures 3 and 4, describes an arrangement of rod-like or -shaped elements (79), which extend through centrally placed passage ways (22).

These rod-shaped elements (79) include a first rod (79a) that has a cap-shaped element (H).

A first rod (79a) is fastened to a coupling element (80), which is freely situated in relation to said means (C) and to which coupling element (80) a second rod (79b) is also fastened.

The two oppositely directed rods (79a, 79b) co-act solely with associated legs so as to firmly hold said legs relative to the member (C).

The rods (79a, 79b) have a circular cross-section and also a relatively high bending resistance in the longitudinal extension of the rods.

The passage ways (22) are intended to conduct oil or grease to partially spherical slide-surface forming elements (H) adjacent the leg.

The publication **"**Voith Research and Design" Vol. 33e (1989), paper 10**"**, also teaches an arrangement that includes a leg penetrating bolt in the universal-joint-related arrangement, although the rotational axles for the torque transmitting member are offset axially in relation to each other in this case.

### SUMMARY OF THE PRESENT INVENTION

### TECHNICAL PROBLEMS

When taking into consideration the technical deliberations that a person skilled in this particular art is required to make in order to provide a solution to one or more technical problems that he/she encounters, it will be seen that on the one hand it is necessary initially to realize the measures and/or the sequence of measures that must be undertaken to this end, and on the other hand to realize which means is/are required in solving one or more of said problems. On this basis, it will be evident that the technical problems listed below are highly relevant to the development of the present invention.

When considering the earlier standpoint of techniques as described above and as defined in the preamble of the accompanying claim 1 it will be seen that a technical problem resides in realising the significance of, the advantages afforded by and/or the technical measures and deliberations that will be required in providing simple constructive measures to create or cause, in a universal-joint-related arrangement, new conditions for providing a function connected with or linked to the function of an axial bearing means with the aid of a number of rod-like elements, serving as torsion dimensioned elements.

A technical problem also resides in the ability to realize the significance of, the advantages afforded by and/or the technical measures and deliberations that will be required in allowing the function of an arrangement, serving as an axial bearing, to consist of four rod-like elements related to respective arms of the cross-member to be fastened to said cross-member in the proximity of its central part.

A further technical problem also resides in the ability to realize the significance of, the advantages afforded by arid/or the technical measures and deliberations that will be required in allowing oppositely located rod-like elements to be anchored to the central part of the cross-member from centrally oriented fastening points and to be active between said cross-member and a leg through the medium of tension forces that press the leg in a direction towards the centre of said cross-member.

Another technical problem resides in the ability to realize the significance of, the advantages afforded by and/or the technical measures and deliberations that will be required in allowing the tension force to be active within the rod-like elements and the corresponding bending of said elements to increase in a torque transfer sequence and bending of the cross-member arms, resulting therefrom a corresponding rotation or turning of an associated leg.

A further technical problem also resides in the ability to realize the significance of, the advantages associated with and/or the technical measures and deliberations that will be required in allowing the forces, acting on a roller bearing, to be distributed along the length of respective arms and the opposing length of the roller bearing associated leg in respect of a torque transfer sequence and the resultant bending of the arms of the torque transmission universal joint and corresponding rotation of associated legs.

Another technical problem resides in the ability to realize the significance of, the advantages associated with and/or the technical measures and deliberations that will be required in allowing the creation of a universal-joint-related arrangement wherein an axial bearing arrangement can be simplified in relation to known technology and to enable a transferable torque to be increased with selected dimensions.

The present invention relates in particular to a first embodiment.

With regard to this embodiment there resides a technical problem in the ability to realize the significance of, the advantages afforded by and/or the technical measures and deliberations that will be required in allowing each of the rod-like elements to consist of a "torsion element", whose inner end portion is fixedly co-ordinated with said cross-member and its outer end portion is fixedly co-ordinated with one of the legs of the forked unit and wherewith a rotational or turning movement occurs between the end part of the cross-member and the legs of said forked unit through the agency of torsion-related rotation or turning of respective rod-like elements.

Another technical problem also resides in the ability to realize the significance of, the advantages afforded by and/or the technical measures and deliberations that will be required in creating small or smaller gaps between the outer end surfaces of the arms and opposing legs of the forked unit with the aid of mutually compressed legs of one and the same forked unit.

Another technical problem resides in the ability to realize the significance of, the advantages afforded by and/or the technical measures and deliberations that will be required in allowing respective rod-like elements to be given a cross-sectional shape, which enables the application of a required holding torque with the aid of a hand tool.

A technical problem also resides in the ability to realize the significance of, the advantages afforded by and/or the technical measures and deliberations that will be required in allowing the rod-like element to be dimensioned to resist high axially acting forces and when necessary to provide a low axially rotational or turning rigidity. Another technical problem resides in the ability to realize the significance of, the advantages afforded by and/or the technical measures and deliberations that will be required in allowing the co-action of an axial bearing means between the end part of the cross-member and its leg to counteract torque, which is activated via the legs of the forked unit relative to the opposing arms of the torque transmitting joint and a stiffening with respect to bending of said arms by the transmitted torque.

A technical problem also resides in the ability to realize the significance of, the advantages afforded by and/or the technical measures and deliberations that will be required in order to enable the bending forces acting on the legs during a torque transmission to be reduced.

A technical problem also resides in the ability to realize the significance of, the advantages afforded by and/or the technical measures and deliberations that will be required in order to be able to create an improved axial bearing arrangement where bending of the arm portion can be reduced by providing a flexible construction of an established co-action between the legs of a U-shape forked unit and its rotational, turning or pivotal attachment to said two arm portions.

A technical problem also resides in the ability to realize the significance of, the advantages afforded by and/or the technical measures and deliberations that will be required in allowing an arrangement that functions as an axial bearing means to include means-related rod-like elements that can be fastened directly to the central part of the cross-member and that are centrally orientated and extend through their respective joint-associated passage ways and that shall be fastened to their respective legs.

Another technical problem resides in the ability to realize the significance of, the advantages afforded by and/or the technical measures and deliberations that will be required in allowing said rod-like elements to press a respective forked unit and its associated legs in a direction towards the centre of the torque transmitting member.

A technical problem also resides in the ability to realize the significance of, the advantages afforded by and/or the technical measures and deliberations that will be necessary in creating conditions required for allowing centrally positioned bearing means, such as spherical axial ball bearings, to be co-ordinated with a chosen number, such as four, forked-unit associated legs.

Another technical problem resides in the ability to realize the significance of, the advantages afforded by and/or the technical measures and deliberations required in enabling spherical axial ball bearings to be enclosed in a centrally positioned, rotational-symmetrical reinforcement assigned to the legs of a forked unit.

A technical problem also resides in the ability to realize the significance of, the advantages associated with and/or the technical measures and deliberations that will be necessary in allowing the legs of the forked unit to surround said radial bearing means related to the arm parts and to present a centrally positioned rotation-symmetrical recess.

A technical problem also resides in the ability to realize the significance of, the advantages afforded by and/or the technical measures and deliberations that will be required in order for rod-like elements to extend centrally solely through end portions of said arm portions where the inner part of the rod-like elements, connected directly to the cross-member, includes a threaded part adapted for co-action with a corresponding threaded region, arranged centrally of the cross-member.

Another technical problem resides in the ability to realize the significance of, the advantages afforded by and/or the technical measures and deliberations that will be required in order to allow the outer parts of respective rod-like elements to include a holder for the spherical axial ball bearing means.

Another technical problem resides in the ability to realize the significance of, the advantages afforded by and/or the technical measures and deliberations that will be required in allowing the spherical axial ball bearing means to be orientated in connection with the outermost or uppermost part of the radial bearing means.

### SOLUTION

The present invention takes its starting point from the known technology regarding a universal-joint-related arrangement described in the introduction.

This arrangement will include a first axle, trunnion or the like having an end-orientated part in the form of a U-shaped forked unit, a torque transmitting "X"-shaped cross member and a second axle, trunnion or the like having an end configuration in the form of a U-shaped forked unit.

More particularly, the legs of the forked unit opposite the cross-member of the arrangement shall be capable of co-acting with two of a total of four mutually opposing arms of the cross-member through the medium of radial bearings while the forked unit on the second axle and the opposing legs of said unit related to the cross-member are capable of co-acting with two of a total of four mutually opposing angled arms of said cross-member through the medium of radial bearings.

With the intention of solving one or more of the aforesaid technical problems, it is particularly proposed that an arrangement that serves the function of an axial bearing means shall include a number of rod-shaped elements related to respective arms and each being positioned centrally in its respective arm part, and that mutually opposing and mutually directed rod-like elements shall be adapted for anchorage from a central fastening point in the central part of the cross-member and function to urge respective legs of the forked unit in a direction towards the centre of the cross-member through the medium of tension forces.

A rod-like element shall be comprised of a "torsion rod" fixedly co-ordinated at its inner end part with said cross-member and at an outer end part fixedly co-ordinated with one of the legs of the forked unit wherein rotational movement, e.g. twisting, between the end part of the cross-member and the leg of the forked unit shall be achieved by torsion-related rotation or turning of the rod-like element.

By way of proposed embodiments that lie within the scope of the inventive concept it is proposed, according to one embodiment, that a small gap is formed between an end face of one arm and one leg of the forked unit.

It is also proposed that the rod-like element has a cross-sectional shape, which enables the application of a holding torque with the aid of a hand tool.

More particularly, it is proposed that the rod-like element is dimensioned to enable it to take-up high axial loads and to offer low twisting or turning rigidity when required.

By way of proposed embodiments that lie within the scope of the inventive concept there is proposed a second embodiment, which includes a number of axial roller bearings, such as spherical axial roller bearings, and that said bearings are co-ordinated with a chosen number, normally four, legs of a forked unit.

It is also proposed that a spherical axial roller bearing shall be enclosed in a forked unit and its legs allotted a centrally placed and rotationally symmetrical reinforcement.

The legs of the forked unit are allowed to embrace a radial bearing means and include a centrally orientated and rotationally symmetrical aperture.

According to the concept of the present invention, a rod-like element extends solely through the end parts of the arms of the cross-member, and that the inner part of the rod-like element includes a thread adapted for fixed co-action with a corresponding thread on the central part of the cross-member.

It is also proposed that the outer part or the inner part of the rod-like element includes a holder for the spherical axial roller bearing.

It is also proposed that the spherical axial roller bearing shall be positioned in connection with the outermost part of the radial bearing means.

### ADVANTAGES

The advantages that can be considered primarily characteristic of the present invention and the particularly significant characteristic features of the invention reside in the creation of conditions wherewith an arrangement, related to a universal-joint of the above described nature, includes an arrangement that serves the function of an axial bearing means for either enhancing the torque of an already dimensioned arranged or for providing a so-called under-dimensioning of the components of a universal-joint-related arrangement for a chosen torque in relation to known technology.

The inventive arrangement beneficially includes means whereby one leg of the forked unit is clamped firmly to an adjacent arm of the torque transmitting cross-member in the form of a rod-shaped element that serves as a torsion element such as to obtain a greater load uptake via the radial bearing means used.

The primary characteristic features of the present invention are set forth in the characterising clause of the accompanying claim 1.

### BRIEF DESCRIPTION OF THE DRAWINGS

Known technology and a number of embodiments at present preferred of an arrangement relating to universal-joints will now be described in more detail with reference to the accompanying drawings, in which;
**Figure 1** is an exploded view in perspective of a prior art universal joint arrangement and an enlarged view of a torque transmitting cross-member;
**Figure 2** is a simplified view of the principles for a universal-joint-related arrangement for allowing the rotational movement of a first axle to be deviated angularly in relation to the rotational movement of a second axle when the first axle and the second axle adopt a chosen angular deviation
F**igure 3** is an enlarged illustration of a known coordination between a first axle that includes a U-shaped forked unit and a "X"-shaped torque transmitting member in a position in which a high torque is transmitted between one of four legs and one of four arms;
**Figure 4** is an enlarged part-view of the angular deviation (shown in Figure 3) of an arm portion of the cross-member and the central parts of said cross-member, with subsequent rotation or twisting of a leg co-ordinated with said arm portion;
**Figure 5** is a cross-sectioned view of a universal-joint-related arrangement according to a first embodiment of the invention, using four "torsion elements" orientated centrally in respective arm parts;
**Figure 6** is an enlarged view of chosen parts of the embodiment illustrated in Figure 5;
**Figure 7** illustrates a first cross-sectional shape of a rod-like element in the form of a torsion element, in accordance with the invention, and adapted for the Figure 5 embodiment;
**Figure 8** illustrates a second cross-sectional form of a torsion element, according to the invention;
**Figure 9** illustrates a third cross-sectional form of a torsion element, according to the invention;
**Figure 10** is a cross-sectional view of a universal-joint-related arrangement, according to the invention, showing a second embodiment of a spherical radial bearing means;
**Figure 11** is an enlarged view of chosen parts of the embodiment according to Figure 10;
**Figure 12** is a cross-sectional view of a universal joint-related arrangement, according to a third embodiment of the invention, showing spherical radial bearings placed in the central part of the cross-member; and
**Figure 13** is an enlarged view of chosen parts of the embodiment shown in Figure 12.

### DESCRIPTION OF KNOWN TECHNOLOGY

Figures 1 through 4 illustrate an earlier known universal-joint-related arrangement "A", which includes a first axle 1 or the like that has at one end a U-shaped forked unit and at its other end a torque transmitting "X"-shaped cross-member 3, and a second axle 2 or the like with an end-orientated U-shaped forked unit 20.

The forked unit 10 on the first axle 1 and the mutually opposing legs 11, 12 related to the cross-member are able to co-act with two of totally four mutually opposing arms 3c, 3d on the cross-member 3 through the medium of radial bearing means 4c, 4a.

The forked unit 20 on the second axle 2 and its associated mutually opposing legs 21, 22 related to the cross-member are able to co-act with two of a total of four mutually opposite axle parts 3b, 3d of the cross-member 3.

Figure 2 illustrates more schematically an embodiment of a universal-joint-related arrangement "A", in which a horizontally orientated first axle 1 is adapted for transmitting torque to a second axle 2 to which an angle "β" is assigned.

Figure 3 is a somewhat exaggerated illustration of the torque transmitting cross-member 3 and its arm part 3a (3c) in co-action with a forked unit 10 and shows a radial bearing 4a in co-action with the arm part 3a and with an axial bearing 8 disposed between the radial bearing 8 and a central part 3' of the cross-member 3.

Figure 4 is a further enlarged and somewhat exaggerated illustration of extremely large compression forces acting on the right side 8a of the axial bearing 8 with much smaller pressure forces, if any at all, acting on the left side 8b of the axial bearing.

This oblique loading is illustrated with an angle "V".

Correspondingly, the end part 3c will bend upwards in Figure 3 at an angle "V" in connection with the leg 11 on which a corresponding force originating from the transmitted torque "M" acts.

It will be evident that in the case of the embodiment illustrated in Figures 3 and 4 and as a result of the conditions created in this embodiment that the axial bearing 8 will create or cause oblique loading of the radial bearing 4a and 4c. (The latter not being shown in detail).

### DESCRIPTION OF EMBODIMENTS NOW PROPOSED

It is pointed out initially that we have chosen to use in the following description of two embodiments that are at present proposed and that include characteristic features significant of the present invention and illustrated in the figures of the accompanying drawings, special terms and terminology with the primary intention of illustrating the inventive concept more clearly.

It will be noted, however, that the expressions and terms chosen here shall not be seen as being limited solely to the chosen terms and expressions used in the description, but that each term and expression chosen shall be interpreted as also including all technical equivalents that function in the same or at least essentially in the same way so as to achieve or essentially achieve the same purpose and/or technical effect.

Figure 1 illustrates a cross-member 3 that comprises four arm parts 3a - 3d which are co-ordinated pair-wise with two legs, where the arm part 3a co-acts with the leg 12 and the opposing arm part 3c co-acts with the leg 11 of the forked unit 10. The arm part 3b co-acts correspondingly with the leg 21 whereas the opposing arm part 3d is intended to co-act with the leg 22.

The rotary or turning movement between the arm part and its associated leg comprises a small angle of rotation and constitutes reciprocal movement within chosen angular values.

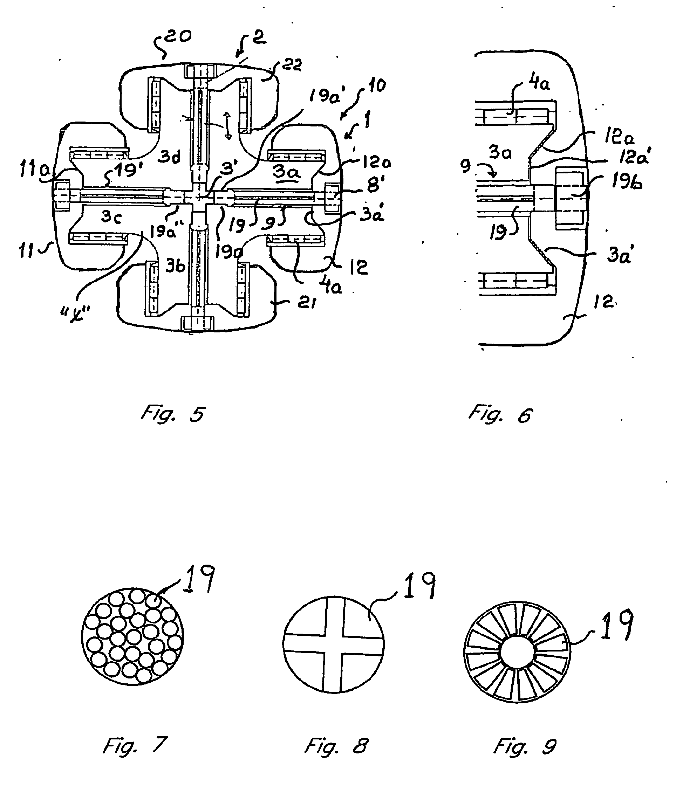

Figure 5 is a plan view and a sectioned view of a first embodiment of a universal-joint-related arrangement "A" according to the present invention, and Figure 6 is an enlarged view of the attachment of one of four elongate members 9, which in this case is illustrated as a torsion element 19.

The co-ordination between each respective leg and its arm part is identical in each individual case, and consequently the following description will be concentrated about the co-ordination between leg 12 and the arm part 3a (alternatively the leg 11 and the arm part 3c).

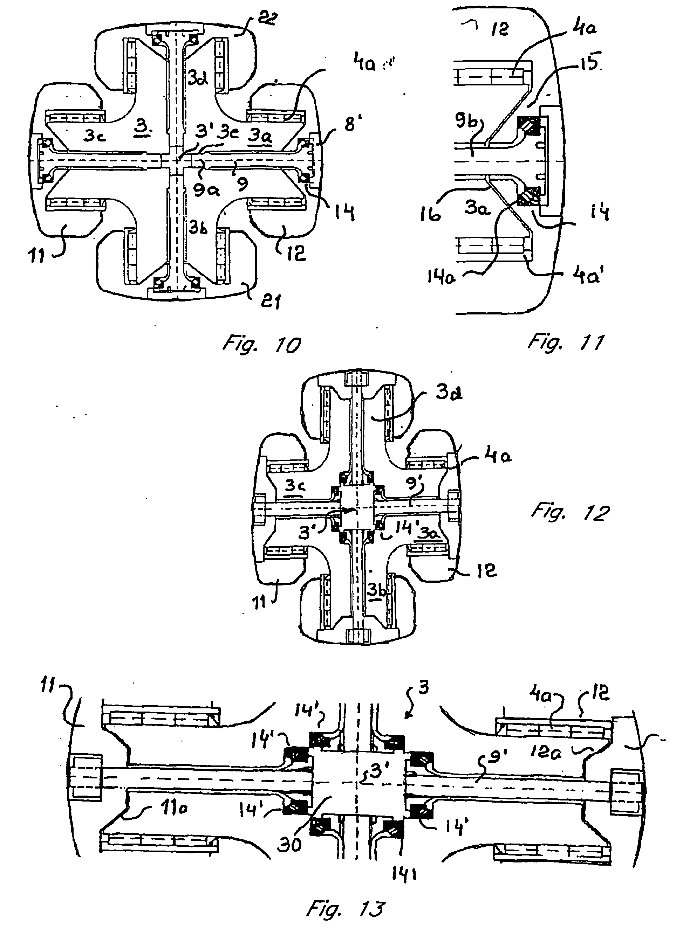

Figures 5 through 9 illustrate an embodiment in which the torque transmitting member 3 is co-ordinated with four torsion elements, while Figures 10 and 11 illustrate an embodiment that includes small radial axial bearings related to the legs, and Figures 12 and 13 illustrate an embodiment which includes small radial axial bearings related to the member 3 and illustrate in more detail the co-action of the arm part 3a with the leg 12, since the co-action between the arm parts 3b, 3c and 3d and the legs 21, 11 and 21 is identical in each individual case.

Such a universal-joint-related arrangement "A" comprises:
a. a first rotatable axle 1 or the like;
b. a first forked unit 10 related to the end region of said first axle 1;
c. where said first forked unit 10 has a U-shape with two legs 11, 12;
d. a torque transmitting cross-member 3 referenced "X";
e. wherein two mutually opposed arm parts 3a, 3c, 3b, 3d of said cross-member 3 are able to co-act rotatably with a respective leg 12, 21; 11, 22;
f. a second rotatable axle 2 or the like;
g. a second end-related forked unit 20 belonging to said second axle 2 and facing towards the cross-member 3;
h. wherein said second forked unit 20 is U-shaped and has two legs 21, 22;
i. wherein two mutually opposed arm parts 3a, 3c belonging to said cross-member 3 each co-act with a respective one of said legs 12, 11;
j. and further comprises four radial bearing means 4a, 4b, 4c, 4d each accommodated in a bearing seating provided on a respective leg and one of the arm parts of the member 3; and
k. a member 5 normally in the form of an axial-bearing-related arrangement which is orientated generally axially between respective legs and respective arm parts and which is active to take-up loads.

As will be seen from Figure 5, the cross-member includes four arm parts 3a, 3b, 3c and 3e, which extend at right angles to one another.

As will also be seen from Figure 5, one arm part 3a, that has an associated radial bearing arrangement 4a, is rotatably fastened in the leg 12 of the forked unit.

In Figures 5 and 6 the rod-shaped member 9 is illustrated as a torsion element 19 where an inner end section 19a is fixedly co-ordinated with the cross-member 3 and where an outer end section 19b of which is fixedly co-ordinated with the legs 12 of the forked unit wherein rotary, e.g. twisting or turning, movement between the arm part 3a of the cross-member and the leg 12 of the forked unit is taken-up through the medium of a torsion-like rotation or turning of the rod-shaped member 19.

It will also be seen from Figures 5 and 6 that a small gap 12a is formed between the end face 3a' of the arm part 3a and a central surface 12a' of the leg 12 of the forked unit.

This gap 12a and a corresponding gap 11a are formed by spacing the legs 11 and 12 to an extent which is greater than that required in an assembled state and by pressing the legs 11 and 12 towards one another in an assembled state with the aid of externally active pressure forces (not shown) and thereafter fastening the torsion element 19 to the leg 12 and the torsion element 19' to the leg 11.

The rod-like elements 19, 19' may also have a cross-sectional shape which will enable the application of a fastening or holding torque with the aid of a hand tool for fastening a thread 19a' provided on the element 19 with a corresponding thread 19a' provided on the cross-member such as with the aid of a "Locktight"^{R} fastener.

More particularly, the rod-shaped element 19 is dimensioned so as to be able to take-up high tension axial forces while having a low bending rigidity and twisting rigidity when the member 19 shall accompany the bending movement of the arm part 3a, as illustrated in Figures 3 and 4.

Figures 7 through 9 illustrate rods 19 of varying cross-sectional shapes, where Figure 7 illustrates the element 19 in the form of a wire, Figure 10 illustrates the element 19 in an "X"-shaped cross-section and Figure 11 illustrates the element 19 in the form of a "wheel", having a centrally orientated passage way.

An arrangement 8' which functions as an axial bearing means includes a cross-member-related rod-like element 9 or an element 19 orientated centrally in a passage way in the arm part 3a, wherein the rod-shaped member 9 or the element 19 is adapted to urge its forked part in a direction towards the centre 3' of the cross-member 3 with the aid of a pulling force.

Figures 10 and 11 illustrate the use of an axial bearing means in the form of an axial spherical roller bearing 14, which is co-ordinated with the leg 12 of the forked unit.

The axial spherical roller bearing 14 is enclosed in the leg 12 of the forked unit and includes a centrally positioned rotational-symmetrical reinforcement 15.

The forked unit and the legs surround the radial bearing means 4a and include a centrally positioned rotationally-symmetrical grove 16.

The rod-shaped member 9 extends centrally through the arm part 3a of the cross-member 3, wherein the inner part or the terminal part of said member 9 includes a thread which is adapted for co-action with a corresponding thread 3e on the cross-member.

The outer part 9b of the rod-shaped member includes a holder 14a for the spherical axial roller bearing means 14.

The spherical axial roller bearing 14 is positioned adjacent the outmost part 4a' of the radial bearing 4a and measures shall be taken to enable the axial bearing 14 to be placed close to or slightly beneath said part 4a'.

Figures 12 and 13 illustrate a third universal-joint-related arrangement in the form of an invert embodiment of the embodiment illustrated in Figures 10 and 11.

In the case of this inverted embodiment, the spherical axial roller bearing means 14' is positioned within the central part 3' of the cross-member 3 and a rod-shaped member 9' extends outward for co-action with the leg 12 of the forked unit.

The four members 9' are each provided with a nut placed in a central recess 30 and carry a spherical axial roller bearing 14' and extend through a passage way to the leg 12 (or to the leg 11).

It is proposed that there is used a bolt whose head will function to press the leg 12 to the illustrated position so as to form the gap 12a.

It will be understood that the invention is not restricted to the above embodiments described by way of example, and that modifications can be made within the scope of the invented concept as defined in the accompanying claims.

It will be particularly observed that each illustrated unit and/or circuits can be combined with each other illustrated unit and/or circuit within the concept of achieving desired technical functions.

## Claims

1. A universal-joint-related arrangement having a first forked unit (10) oriented at one end of a first axle (1) or the like, an "X"-shaped cross-member (3) adapted for torque transmission, and a second forked unit (20) oriented at the end of a second axle (2) or the like, wherein the first forked unit (10) and its mutually opposing legs (11, 12) related to said cross-member are able to co-act over radial bearing means (4a -4d) with two (of a total of four) mutually opposite arm parts (3a, 3c; 3b, 3d) of said cross-member (3) whereas the second forked unit (20) and its cross-member-related and mutually opposite legs (21, 22) are able to co-act over radial bearing means with a further two (of a total of four) mutually opposite arm parts of said cross-member (3), said arrangement further comprising an arrangement which functions as an axial bearing means and which comprises a number of rod-like elements (9) related to respective arm parts, wherein each of said centrally oriented rod-like elements (9) is oriented centrally in a respective arm part, wherein mutually opposite rod-like elements are anchored in the central part (3') of the cross-member (3) from a centred attachment point so as to allow an associated leg (12) to be urged in a direction towards the centre (3') of the cross-member (3) with the aid of pulling forces, **characterised in that** the rod-shaped element (9) is comprised of a torsion element (19), whose end part is fixedly co-ordinated with the cross-member (3) and the outer end part of which is fixedly co-ordinated with one leg (12) of a forked unit, and wherein rotational or turning movement between the cross-member (3) and the leg (12) of the forked unit takes place in response to torsion-related rotation or turning of the rod-like element (9, 19).

2. An arrangement according to claim 1, **characterised by** a small gap (12a) formed between the end face (3a') of an arm part and the leg (12) of the forked part.

3. An arrangement according to claim 1 or 2, **characterised in that** the rod-like member (9) or a rod-like element (19) has a cross-sectional shape which enables the application of a fastening or holding torque with the aid of a hand tool.

4. An arrangement according to claim 1, **characterised in that** the rod-like element is dimensioned to be able to take up high axial forces and has a low torsional rigidity.

5. An arrangement according to claim 1, **characterised in that** the spherical axial roller bearing means (14) is co-ordinated with a chosen number (normally four) of legs (12) of a forked unit.

6. An arrangement according to claim 1 or 5, **characterised in that** each of said spherical axial roller bearings (14) is enclosed in an associated leg (12) with the forked unit and includes a centrally placed rotational-symmetrical reinforcement.

7. An arrangement according to claim 1, 5 or 6, **characterised in that** each of the legs (12) of the forked unit surrounds a radial bearing means (14) and includes on one end a centrally oriented and rotational-symmetrical recess.

8. An arrangement according to claim 1 or 5, **characterised by** a rod-like element (9) which extends centrally through the arm parts, wherein the inner part of the element (9) assigned to the cross-member includes a thread adapted for co-action with a corresponding thread on said cross-member.

9. An arrangement according to claim 1, 5 or 8, **characterised in that** the outer part of the rod-like element includes a holder for accommodating a spherical axial roller bearing.

10. An arrangement according to claim 7 or 9, **characterised in that** the spherical axial roller bearing is oriented in connection with the outermost part of a radial bearing means.

11. An arrangement according to claim 1, 5 or 8, **characterised in that** one part of the rod-shaped element (9) includes a holder for accommodating a spherical axial roller bearing.

## Patentansprüche

1. Universalgelenkartige Anordnung, die eine erste Gabeleinheit (10), die an einem Ende einer ersten Achse (1) oder dergleichen ausgerichtet ist, ein "X"-förmiges Kreuzelement (3), das für eine Drehmomentübertragung ausgelegt ist, und eine zweite Gabeleinheit (20), die an dem Ende einer zweiten Achse (2) oder dergleichen ausgerichtet ist, aufweist, wobei die erste Gabeleinheit (10) und ihre einander gegenüberliegenden Schenkel (11, 12), die mit dem Kreuzelement in Beziehung stehen, über radiale Lagermittel (4a-4d) mit zwei (von insgesamt vier) einander gegenüberliegenden Armteilen (3a, 3c; 3b, 3d) des Kreuzelements (3) zusammenwirken können, während die zweite Gabeleinheit (20) und ihre einander gegenüberliegenden Schenkel (21, 22), die mit dem Kreuzelement in Beziehung stehen, über radiale Lagermittel mit weiteren zwei (von insgesamt vier) einander gegenüberliegenden Armteilen des Kreuzelements (3) zusammenwirken können, wobei die Anordnung ferner eine Anordnung umfasst, die als ein axiales Lagermittel dient und zahlreiche stangenartige Elemente (9) umfasst, die mit jeweiligen Armteilen in Beziehung stehen, wobei jedes der mittig orientierten stangenartigen Elemente (9) in einem jeweiligen Armteil mittig orientiert ist, wobei einander gegenüberliegende stangenartige Elemente in dem Mittelteil (3') des Kreuzelements (3) an einem zentrischen Befestigungspunkt verankert sind, um zu ermöglichen, dass ein zugeordneter Schenkel (12) mit Hilfe von Zugkräften in eine Richtung zum Zentrum (3') des Kreuzelements (3) gedrängt wird, **dadurch gekennzeichnet, dass** das stangenartige Element (9) aus ein Torsionselement (19) besteht, dessen Endabschnitt dem Kreuzelement (3) fest zugeordnet ist und dessen äußerer Endabschnitt einem Schenkel (12) einer Gabeleinheit fest zugeordnet ist, wobei eine Rotations- oder Drehbewegung zwischen dem Kreuzelement (3) und dem Schenkel (12) der Gabeleinheit als Reaktion auf eine torsionsartige Rotation oder Drehung des stangenartigen Elements (9, 19) erfolgt.

2. Anordnung nach Anspruch 1, **gekennzeichnet durch** einen schmalen Spalt (12a), der zwischen der Stirnfläche (3a') eines Armteils und dem Schenkel (12) des Gabelteils ausgebildet ist.

3. Anordnung nach Anspruch 1 oder 2, **dadurch gekennzeichnet, dass** das stangenartige Element (9) oder ein stangenartiges Element (19) eine Querschnittsform aufweist, die die Beaufschlagung eines Befestigungs- oder Haltedrehmoments mit Hilfe eines Handwerkzeugs ermöglicht.

4. Anordnung nach Anspruch 1, **dadurch gekennzeichnet, dass** das stangenartige Element so bemessen ist, dass es große axiale Kräfte aufnehmen kann, und eine niedrige Torsionssteifigkeit besitzt.

5. Anordnung nach Anspruch 1, **dadurch gekennzeichnet, dass** die sphärischen Axialwälzlagermittel (14) einer gewählten Anzahl von (normalerweise vier) Schenkeln (12) einer Gabeleinheit zugeordnet sind.

6. Anordnung nach Anspruch 1 oder 5, **dadurch gekennzeichnet, dass** jedes der sphärischen Axialwälzlager (14) in einem zugeordneten Schenkel (12) der Gabeleinheit eingeschlossen ist und eine mittig angeordnete rotationssymmetrische Verstärkung aufweist.

7. Anordnung nach Anspruch 1, 5 oder 6, **dadurch gekennzeichnet, dass** jeder der Schenkel (12) der Gabeleinheit ein Radiallagermittel (14) umgibt und an einem Ende eine mittig orientierte und rotationssymmetrische Aussparung enthält.

8. Anordnung nach Anspruch 1 oder 5, **gekennzeichnet durch** ein stangenartiges Element (9), das sich mittig **durch** die Armteile erstreckt, wobei der innere Abschnitt des Elements (9), der dem Kreuzelement zugewiesen ist, ein Gewinde enthält, das für eine Zusammenwirkung mit einem entsprechenden Gewinde am Kreuzelement ausgelegt ist.

9. Anordnung nach Anspruch 1, 5 oder 8, **dadurch gekennzeichnet, dass** der äußere Teil des stangenartigen Elements einen Halter enthält, um ein sphärisches Axialwälzlager aufzunehmen.

10. Anordnung nach Anspruch 7 oder 9, **dadurch gekennzeichnet, dass** das sphärische Axialwälzlager in Verbindung mit dem äußersten Teil eines Radialwälzlagers orientiert ist.

11. Anordnung nach Anspruch 1, 5 oder 8, **dadurch gekennzeichnet, dass** ein Teil des stangenartigen Elements (9) einen Halter für die Aufnahme eines sphärischen Axialwälzlagers enthält.

## Revendications

1. Agencement de type cardan ayant une première unité fourchue (10) orientée à une extrémité d'un premier essieu (1) ou similaire, une traverse (3) en forme de X prévue pour la transmission de couple, et une deuxième unité fourchue (20) orientée à l'extrémité d'un deuxième essieu (2) ou similaire, la première unité fourchue (10) et ses branches mutuellement opposées (11, 12) associées à ladite traverse étant aptes à coopérer par le biais de moyens de paliers radiaux (4a - 4d) avec deux (sur un total de quatre) parties de bras mutuellement opposées (3a, 3c ; 3b, 3d) de ladite traverse (3) tandis que la deuxième unité fourchue (20) et ses branches (21, 22) associées à la traverse et mutuellement opposées sont aptes à coopérer par le biais de moyens de paliers radiaux avec deux autres (sur un total de quatre) parties de bras mutuellement opposées de ladite traverse (3), ledit agencement comprenant en outre un agencement qui fonctionne comme un moyen de palier axial et qui comprend une pluralité d'éléments de type tige (9) associés aux parties de bras respectives, chacun desdits éléments de type tige (9) orientés centralement étant orienté centralement dans une partie de bras respective, des éléments de type tige mutuellement opposés étant ancrés dans la partie centrale (3') de la traverse (3) à partir d'un point de fixation centré de manière à permettre à une branche associée (12) d'être sollicitée dans une direction vers le centre (3') de la traverse (3) à l'aide de forces de traction, **caractérisé en ce que** l'élément en forme de tige (9) est constitué d'un élément de torsion (19) dont la partie d'extrémité est coordonnée de manière fixe à la traverse (3) et dont la partie d'extrémité externe est coordonnée fixement à une branche (12) d'une unité fourchue, le mouvement de rotation ou tournant entre la traverse (3) et la branche (12) de l'unité fourchue ayant lieu en réponse à la rotation associée à la torsion de l'élément de type tige (9, 19).

2. Agencement selon la revendication 1, **caractérisé par** un petit espace (12a) formé entre la face d'extrémité (3a') d'une partie de bras et la branche (12) de la partie fourchue.

3. Agencement selon la revendication 1 ou 2, **caractérisé en ce que** l'organe de type tige (9) ou un élément de type tige (19) a une forme en section transversale qui permet l'application d'un couple d'attache ou de retenue à l'aide d'un outil manuel.

4. Agencement selon la revendication 1, **caractérisé en ce que** l'élément de type tige est dimensionné de manière à être apte à reprendre des forces axiales élevées et présente une faible rigidité en torsion.

5. Agencement selon la revendication 1, **caractérisé en ce que** le moyen de palier à roulement axial sphérique (14) est coordonné à un nombre sélectionné (normalement quatre) de branches (12) d'une unité fourchue.

6. Agencement selon la revendication 1 ou 5, **caractérisé en ce que** chacun desdits paliers à roulements axiaux sphériques (14) est enfermé dans une branche associée (12) avec l'unité fourchue et comporte un renforcement à symétrie de révolution placé centralement.

7. Agencement selon la revendication 1, 5 ou 6, **caractérisé en ce que** chacune des branches (12) de l'unité fourchue entoure un moyen de palier radial (14) et comporte à une extrémité un retrait à symétrie de révolution orienté centralement.

8. Agencement selon la revendication 1 ou 5, **caractérisé par** un élément de type tige (9) qui s'étend centralement à travers les parties de bras, la partie interne de l'élément (9) associé à la traverse comportant un filetage adapté pour coopérer avec un filetage correspondant sur ladite traverse.

9. Agencement selon la revendication 1, 5 ou 8, **caractérisé en ce que** la partie externe de l'élément de type tige comporte un support pour recevoir un palier à roulement axial sphérique.

10. Agencement selon la revendication 7 ou 9, **caractérisé en ce que** le palier à roulement axial sphérique est orienté en rapport avec la partie la plus externe d'un moyen de palier radial.

11. Agencement selon la revendication 1, 5 ou 8, **caractérisé en ce qu'**une partie de l'élément en forme de tige (9) comporte un support pour recevoir un palier à roulement axial sphérique.
